# EUROPEAN PATENT APPLICATION

(11) **EP 3 599 006 A1**
(43) Date of publication of application: **29.01.2020**
(21) Application number: 18185158.5
(22) Date of filing: 24.07.2018
(51) Int. Cl.: B01D 35/30, B01D 29/05, B01D 46/00, B01D 46/10

(54) **FILTER LOCK**

(71) Applicant: Industrilås I Nässjö AB, 571 23 Nässjö (SE)
(72) Inventor: Hjertqvist, Eric, 571 23 Nässjö (SE)
(74) Representative: AWA Sweden AB

(57) **Abstract**

A filter lock (1) for securing a filter (50) to a filter support frame (60) is provided. The filter lock comprises a supporting member (10), and a rotating member (20) rotatably arranged to the supporting member (10) about a rotational axis (A), the rotating member (20) comprising a first and a second rim surface (21a, 21b), wherein the filter lock (1) is configured to be arranged to a filter support frame (60) supporting a filter (50) such that the rotating member (20) is rotatable between a secured position, at which position the first rim surface (21a) of the rotating member is facing the filter (50) and pressing onto said filter, and a fully open position, at which position the second rim surface (21b) of the rotating member is facing the filter (50). Further, a system comprising a filter lock, a filter, and a filter support frame is provided.

## Description

### Technical Field

The present disclosure relates to a filter lock for securing a filter to a filter support frame.

### Background

Conventionally, filter support frames are provided with a support edge for supporting a filter arranged in place such that the filter may filter a fluid flow, for instance an air flow. Further, filter support frames are often provided with an inner frame edge extending parallel with the support edge and at a distance from said support edge.

As fluid passes the filter, the filter arranged in place will collect impurities in the fluid flow and consequently purify the fluid flow. Over time, as the filter collects more and more impurities, the fluid flow through the filter is reduced due to the filter becoming clogged. Hence, the filter must be exchanged for a new filter, or cleaned if the filter in use is reusable. This poses a problem, as filters are conventionally arranged fixedly to a filter support frame using screws, leading to considerable filter detaching and filter reattaching times, consequently amounting to considerable installation costs.

Hence, there is a need for an improved arrangement for securing a filter to a filter support frame, which arrangement allows for facilitated detachment and attachment of a filter to a corresponding filter support frame.

### Summary

It is an object of the present invention to provide an improved solution that alleviates the mentioned drawbacks with present solutions. Furthermore, it is an object to provide a filter lock for securing a filter to a filter support frame that facilitates detachment and attachment of a filter to a corresponding filter support frame. The invention is defined by the appended independent claims, with embodiments being set forth in the appended dependent claims, in the following description and in the drawings.

According to a first aspect of the invention, a filter lock for securing a filter to a filter support frame is provided. The filter lock comprises a supporting member, and a rotating member rotatably arranged to the supporting member about a rotational axis, the rotating member comprising a first rim surface and a second rim surface, wherein the filter lock is configured to be arranged to a filter support frame supporting a filter such that the rotating member is rotatable between a secured position, at which position the first rim surface of the rotating member is, when in use, facing the filter such that said filter is secured to the filter support frame, and a fully open position, at which position the second rim surface of the rotating member is, when in use, facing the filter.

The filter may be fixed relative to the filter support frame when the filter lock is in the secured position, and may be removed from the filter support frame when the filter lock is in the fully open position. The filter lock may, when the rotating member is in a secured position, secure and lock the filter in place to the filter support frame. An advantage of such a filter lock may be a facilitated detachment and attachment of a filter to a corresponding filter support frame. By arranging the filter lock to a filter support frame such that a portion of a top surface of the supporting member abuts an inner frame edge of a filter support frame, the rotating member may rotate into the secure position, at which position the filter is clamped in place between the filter lock and the support edge. Said clamping may be sufficient to secure the filter in place to the filter support frame. The filter may hence be secured in place by a single rotation of the rotating member of the filter lock.

The supporting member may have a bottom surface. The bottom surface may, when in use, face the filter. When the rotating member is in the open position, the second rim surface may extend in a plane that coincide with the plane of the supporting member bottom surface, or is offset from the plane of the supporting member bottom surface. The second rim surface may in the open position be offset in a direction into the supporting member, which direction may also be described as a direction away from the filter when in use. In the open position, the second rim surface may be substantially in parallel with the supporting member bottom surface. When the rotating member is in the secured position, the first rim surface may extend in a plane that is offset from the plane of the supporting member bottom surface in a direction away from the supporting member. Said direction may also be described as towards the filter when in use. In the secured position, the first rim surface may be in parallel with the supporting member bottom surface.

Further, the filter lock may be configured to be arranged to the filter support frame without using any screws or equivalent fastening elements. The filter lock may be held in place securely as the rotating member clamps the filter in place, which consequently pushes said top surface portion in abutment with the inner frame edge. However, the filter lock may be configured to be attached fixedly using screws or similar components. The supporting member may comprise holes for receiving screws to hold the supporting member fixed relative the filter support member. The filter lock may be configured such that the supporting member does not need to be removed from the filter support frame when the clamped filter needs to be exchanged or cleaned. The filter lock may be configured such that a filter is removable from the filter support frame when the rotating member is moved into a fully open position.

Further, a plurality of filter locks may be arranged along inner walls of a filter support frame to clamp a filter in place to a filter support frame. Having a plurality of filter locks may improve the clamping effect on the filter. By having a plurality of filter locks arranged to the filter support frame to secure the filter in place, it may further ensure that the filter is arranged securely to the filter support frame.

Further, the pressing of the rotating member onto the filter does not necessarily require that the rotating member and the filter is in direct contact. For instance, a cover may be arranged in between the filter and the filter lock. Then, when the rotating member of the filter lock is rotated into a secured position, the rotating member will press onto the cover, which consequently presses onto the filter. Hence, the filter lock may still secure a filter in place even when a cover is arranged in between said filter and filter lock.

According to one embodiment, the supporting member may comprise an abutting surface connecting a top surface and a bottom surface of the supporting member, and the filter lock may be configured to be arranged to the filter support frame supporting the filter such that the abutting surface abuts the filter support frame, and the bottom surface faces the filter.

An advantage of said abutting surface is that the filter lock may be more adapted to secure the filter to the filter support frame. When rotating the rotating member into engagement with the filter, the supporting member consequently presses onto the filter support frame and is pressed away from the filter. The abutting surface may be configured to provide the filter lock with support to counteract this effect. The abutting surface may be arranged on an abutting side, which abutting side comprises at least one recess. The abutting surface may extend around said at least one recess. The abutting surface may extend along the border of said abutting side of the filter lock abutting the filter support frame when arranged thereto. Further, the abutting surface may have such a shape to improve abutment area to the filter support frame it is intended to be arranged to. The abutting surface may for instance be substantially planar. The abutting surface may also be curved, such curved to match the curvature of a curved filter support frame.

According to a further embodiment, the supporting member may comprise a protruding element configured to engage with a frame edge of the filter support frame.

An advantage of the above embodiment may be to improve engagement of the filter lock with the filter support frame. The protruding element may be configured to engage with an inner frame at least extending outward from an inner wall of the filter support frame, and then at least extending in a direction parallel to the inner wall of the filter support frame, toward the location at which a filter is to be arranged. Such an inner frame edge may have a cross section being substantially L-shaped, which allows for the protruding element to engage with said inner frame edge by having the filter lock arranged such that the protruding element is inserted in the gap formed by the inner frame edge and the inner wall of the filter support frame. The protruding element may comprise a top surface being substantially planar so as to increase the contact surface between the protruding element and the bottom surface of the L-shaped inner frame edge, the bottom surface in said gap. The protruding element may have a thickness substantially equal that of the width of the gap formed by the inner frame edge and the inner wall of the filter support edge. By having such a protruding element, the filter lock may provide an enhanced clamping effect acting on the filter and further secure the filter to the filter support frame.

According to a further embodiment, the protruding element may protrude from a top surface of the supporting member. The top surface of the supporting member may be a surface facing away from the filter when the filter lock is in use in a filter support frame. By having the protruding element protruding from the top surface, an advantage of the above embodiment is that the protruding element may more readily engage with an inner frame edge. A further advantage of the above embodiment is that the protruding element and the supporting member may be manufactured as a solid component. This may reduce manufacturing cost of the filter lock.

According to a further embodiment of the present invention, the first rim surface of the rotating member may be substantially planar.

An advantage of the above embodiment is that the first rim surface may distribute the contact force between the rotating member and the filter over a larger area. This may reduce the risk of the filter breaking due to the applied force of the rotating member as it is rotated into a secured position.

According to a further embodiment of the present invention, the second rim surface of the rotating member may be substantially planar, and may be arranged substantially perpendicular relative to the first rim surface.

An advantage of the above embodiment is that the gap between the filter and the second rim surface, when the rotating is in a fully open position, is increased. This may facilitate the filter to be removed from the filter support frame when the rotating member of the filter lock is in a fully open position.

According to a further embodiment of the present invention, a corner connecting the first rim surface and the second rim surface may be curved.

An advantage of the above embodiment is that the rotating member may more easily be rotated between the secured position and the fully open position when making contact with the filter, or a cover arranged in between the filter lock and the filter. Further, the resulting contact force acting between the filter lock and the corresponding contacted surface may be distributed more favorably, thereby improving durability of the filter lock and the filter contact is being made.

According to a further embodiment of the present invention, the first rim surface transitions into the corner at an offset with respect to a plane that is perpendicular to the first rim surface of the rotating member and which plane coincides with the rotational axis.

An advantage of the above embodiment is a resulting self-locking functionality of the rotating member. The rotating member may be prevented from being rotated away from the secured position by interactions with the filter alone. In order for the rotating member to be rotated from the secured position, a force inducing said rotation must overcome the contact force arising from the filter arranged in place.

The filter lock may further be designed to enhance the self-locking functionality. This may be accomplished by modifying a depth of the rotating member, the depth being the transversal distance measured from a location at which the rotational axis intersects the rotating member to the first rim surface. By adjusting said depth, the contact force arising between the rotating member and the filter may be adjusted to a desired magnitude. The force magnitude may for instance be based on a peak contact force arising due to air flow through the filter.

Further, the self-locking functionality may be further enhanced by modifying the shape of the rotating member. This may be accomplished by modifying a height of the supporting member, the height measured from a portion abutting the inner frame edge of the filter support frame and location at which the rotational axis intersects the supporting member. By adjusting the height, the rotational axis will end up either closer to or further away from the filter when the filter lock is arranged to a filter support frame supporting a filter, thereby consequently impacting the resulting contact force.

In one embodiment, a distance between the first rim surface and the rotational axis may be larger than a distance between the second rim surface and the plane which is perpendicular to the first rim surface and that coincides with the rotational axis.

According to a further embodiment of the present invention, the filter lock may be configured to be arranged at an inner corner of a filter holding frame, and the supporting member of the filter lock comprises a first protruding element and a second protruding element, wherein each protruding element extends in directions substantially perpendicular to each other, wherein the protruding elements are configured to engage with second inner frame edges arranged on respective sides of said corner.

An advantage of the above embodiment is that the filter lock may be more suitable to be arranged in a corner. Hence, only four filter locks may be necessary to secure a filter to a filter support frame, one at each corner.

According to a further embodiment of the present invention, the supporting member comprises a first abutting surface and a second abutting surface, said abutting surfaces being substantially planar and arranged mutually perpendicular to one another, said abutting surfaces configured to abut respective sides of said corner.

An advantage of the above embodiment is that the filter lock is provided with more suitable surfaces for abutting inner walls of a filter support frame. The planar surfaces may further guide the supporting member to engage with the inner frame edges of a filter support frame.

According to a further embodiment of the present invention, the rotating member may comprise a gripping portion.

An advantage of the above embodiment is facilitated actuation of a rotation of the rotating member.

According to a second aspect of the present invention, a use of a filter lock to secure a filter to a filter support frame provided. The filter lock may be configured according to any embodiments of the present invention.

According to a third aspect of the present invention, a filter system for filtering a fluid containing impurities is provided. The filter system comprises: a filter support frame comprising a support edge and an inner frame edge; a filter configured to be arranged in said filter support frame in abutment with the support edge, and a filter lock according to any preceding claims configured to be arranged in-between said inner frame edge and the filter to secure the filter to the filter support frame by rotating the rotating member into a secured position.

An advantage of such a filter system is that the filter may be more easily detached and attached to said filter support frame. The filter lock in said filter system may be configured according to any embodiments disclosed previously. The filter system may comprise a plurality of such filter locks to improve clamping functionality of the filter to the filter support frame. The filter locks may be arranged along any of the inner walls of a filter support frame to clamp the filter in place. The filter locks may be arranged at corners of the filter support frame.

Further, the filter lock may not only be suitable to be arranged to filter support frames configured to support filters having a quadratic surface shape. The filter lock may just as well clamp filters having a circular surface shape as well. In fact, the filter lock is not limited to clamp any particular filter shape. It may conveniently be suitable to secure a filter having any shape to a corresponding filter support frame.

### Brief Description of the Drawings

The invention will in the following be described in more detail with reference to the enclosed drawings, wherein:
Fig. 1 shows a perspective view of the filter lock according to one embodiment of the invention;
Fig. 2 shows a perspective view of the filter lock according to one embodiment of the invention;
Fig. 3 shows a perspective view of the filter lock according to one embodiment of the invention;
Fig. 4 shows a perspective view of the filter lock according to one embodiment of the invention;
Fig. 5 shows a perspective view of the filter lock when arranged to secure a filter to a filter support frame according to one embodiment of the invention;
Fig. 6 shows a zoomed in perspective view of the filter lock when arranged to secure a filter to a filter support frame according to one embodiment of the invention;
Fig. 7 show a side view of the filter lock when arranged in a filter support frame having a filter in place according to one embodiment of the invention;
Fig. 8 show a side view of the filter lock when moved to secure the filter to the filter support frame according to one embodiment of the invention, and
Fig. 9 show a side view of the filter lock when securely clamping the filter to the filter support frame according to one embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Although specific terms are employed, they are used in a generic and descriptive sense only and not for the purpose of limitation. Furthermore, the scope of the invention being set forth in the following claims. In the description and drawings, like numbers refer to like elements.

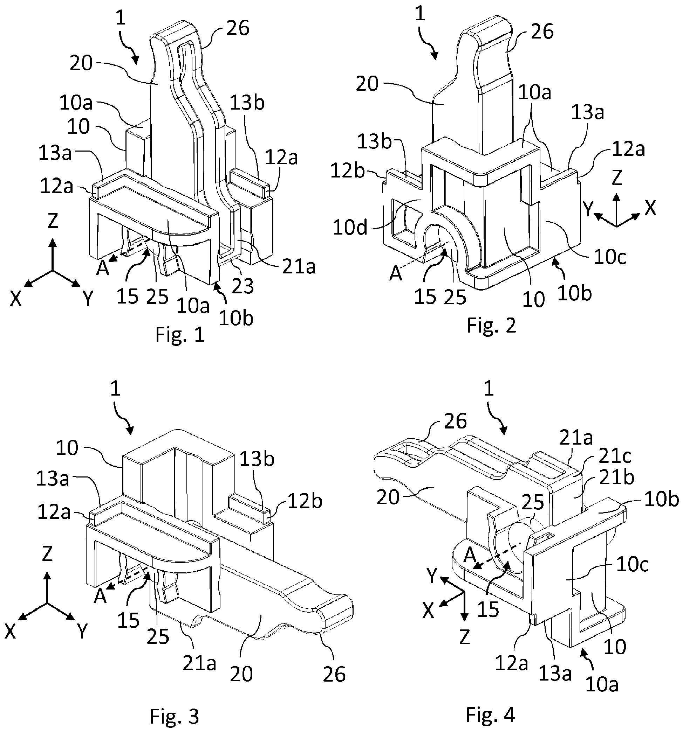

The present invention relates to a filter lock 1 for securing a filter 50 to a filter holding frame 60. The filter lock 1 comprises a supporting member 10 and a rotating member 20 rotatably arranged to the supporting member 10 about a rotational axis A, as is illustrated in Figs. 1 - 4.

The supporting member 10 extends in three mutually perpendicular axes: a first axis X, a second axis Y, and a third axis Z. The supporting member 10 comprises a top and a bottom surface 10a, 10b, wherein the bottom surface 10b is arranged on an opposite side of the supporting member 10 with respect the top surface 10a. Each surface of the top and bottom surface 10a, 10b are arranged substantially parallel to a plane spanned by the first axis X and the second axis Y. The top and bottom surface 10a, 10b are offset relative each other by a distance along the third axis Z. The supporting member further comprises a first abutting surface 10c arranged to extend along a side connecting a top side of the filter lock and a bottom side of the filter lock. The top side of the filter lock is the side of the filter lock comprising the top surface 10a. The bottom side is the side of the filter lock comprising the bottom surface 10b. The supporting member 10 also comprises a second abutting surface 10c arranged to extend along a side connecting said top and bottom side of the filter lock.

The supporting member 10 further comprises an axle slot 15 extending in a direction parallel to the first axis X and extending through each supporting member portion. The axle slot 15 is configured to tightly hold a cylindrical axle 25 in place while allowing said cylindrical axle to rotate. The axle slot 15 is configured to allow said cylindrical axle 25 to rotate about a rotational axis A. The rotational axis A and the first axis X are mutually parallel. The axle slot 15 is also open to the bottom side. The axle slot 15 is open along its longitudinal extension along axis X. The axle slot 15 is further formed so as to clamp the axle 25 when the axle 25 has been positioned in the axle slot 15. The axle slot 15, being open along its extension and providing said clamping, provides that the axle 25 can be snapped into position in the axle slot 15.

The supporting member 10 also comprises a first protruding element 12a and a second protruding element 12b, each configured to engage with corresponding support edges 63a, 63b of the filter support frame 60. The protruding elements 12a, 12b extend in a first direction along the third axis Z from the top surface 10a, and extend in mutually perpendicular directions along the top surface 10a. The protruding elements 12a, 12b are configured to engage with inner frame edges 63a, 63b arranged on respective sides 61a, 61b of a corner edge of the filter support frame. Each protruding element 12a, 12b comprise a planar surface 13a, 13b to maximize contact area between the protruding elements 12a, 12b to the inner frame edges 63a, 63b.

The rotating member 20 comprises a first rim surface 21a and a second rim surface 21b. The first and second rim surfaces 21a, 21b are arranged along a rim side of the rotating member 20, the rim side being the side connecting a first and a second side of the rotating member through which the rotational axis A extends. The first rim surface 21a and the second rim surface 21b are arranged substantially perpendicular relative each other. The first rim surface 21a and the second rim surface 21b are connected to each other via a corner edge 21c. A region near the corner edge 21c is curved, such that the surface of the corner edge 21c connects smoothly with the first rim surface 21a. The surface of the corner edge 21c may also connect smoothly with the second rim surface 21b. The rotating member 20 further comprises a longitudinal axle 25. The longitudinal axle 25 is configured to be arranged inside the axle slot 15. The longitudinal axle 25 is cylindrical in shape, and has a substantial circular cross section along the rotational axis A. The slot 15 is cylindrical in shape as well, specifically having a circular cross section along the rotational axis A. The rotating member 20 is configured to rotate relative the supporting member about the rotational axis A.

The rotating member 20 also comprises a longitudinal gripping portion 26 extending substantially in a direction perpendicular to the axle 25. The gripping portion 26 is configured to be gripped by a user. The gripping portion 26 facilitates actuation of a rotation of the rotating member 20.

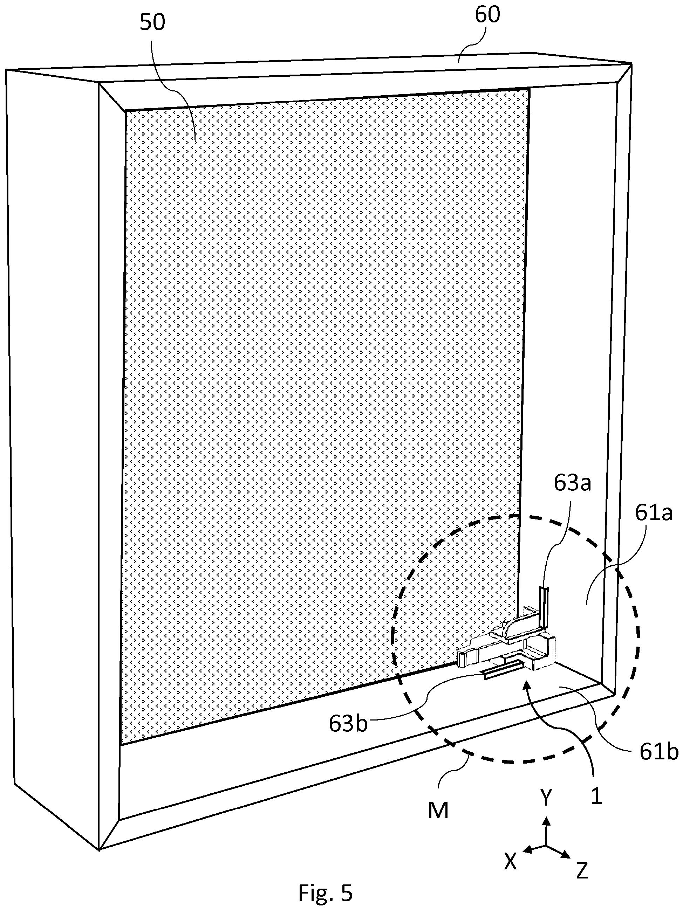

The filter lock 1 is configured to be arranged to a filter support frame 60 for securing a filter 50 to said filter support frame 60. In Fig. 5, the filter lock 1 is arranged to one inner corner edge of a filter support frame 60, to abut a first and a second inner wall 61a, 61b. A filter lock 1 may be arranged to each inner corner edge for securing a filter 50 arranged in place of the filter support frame 60. However, for illustrative purposes, the filter lock 1 is only arranged at one corner, specifically at the inner corner edge enclosed by the circle M.

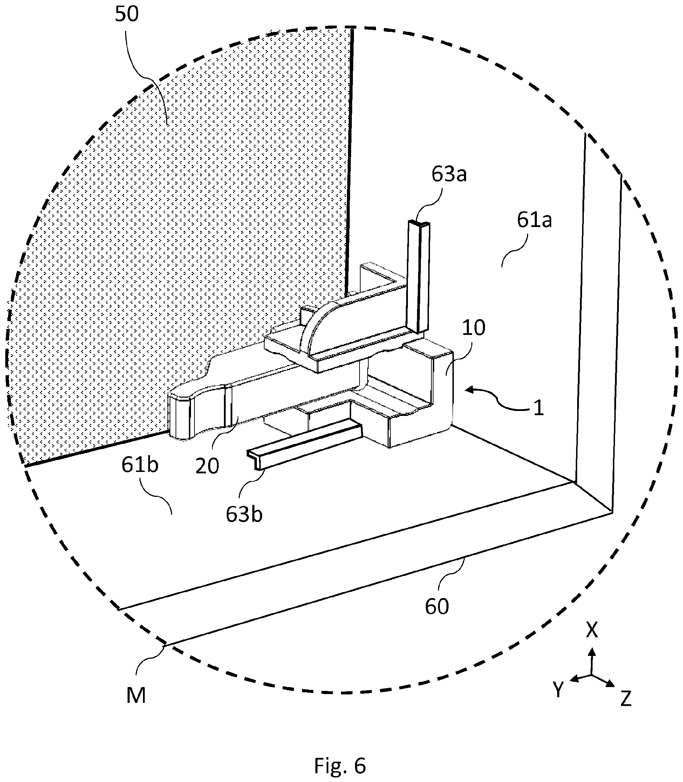

Fig. 6 illustrate a zoomed in portion of the region of Fig. 5 enclosed by the circle M. The filter lock 1 is arranged at one inner corner edge of the filter support frame 60 such that the rotating member abuts and presses onto the filter 50. The inner frame edges 63a, 63b provided on each respective side of the inner corner of the filter support frame enables the filter lock, when the rotating member 20 is in a secure position, to push onto the filter and clamping it in place together with the support edge 63.

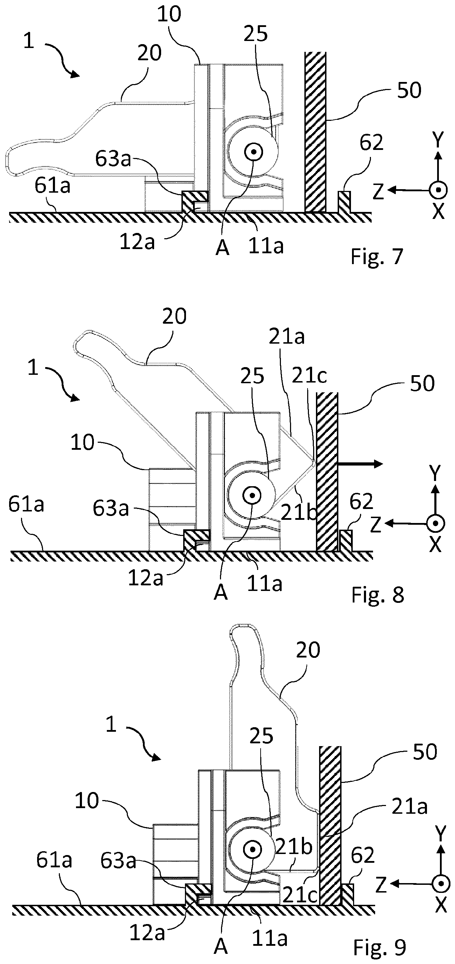

Figs. 7 - 9 further illustrate the working principle of the filter lock. In Fig. 7, the filter lock 1 is arranged to an inner wall 61a such that the first abutting surface 10c of the supporting member abuts said inner wall. The filter lock 1 is further arranged such that the protruding element 12a engages with an inner frame edge 63a. When the protruding element 12a engages with the inner frame edge 63a, the rotating member 20 may rotate from a fully open position toward a secured position, shown in Fig. 9. As the rotating member 20 rotates from the fully open position to the secured position, the corner edge 21c comes in contact with the filter 50. As the rotating member 20 rotates further in said direction, the corner edge 21c presses the filter 50 to move in a negative Z direction as indicated by the arrow in Fig. 8. The filter 50 is displaced in the negative Z direction until the filter 50 comes into contact with the support edge 62. Then, as the rotating member 20 rotates even further, the corner edge 21c presses the filter 50 such that it flexes about a plane parallel to the plane spanned by the first axis X and the second axis Y. The corner edge 21c is moved along the surface of the filter in a direction parallel to negative Y axis direction. In Fig. 9, the rotating member 20 has been rotated into secured position, at which position the first rim surface 21a of the rotating member is in contact with the filter 50 and the second rim surface 21b faces the inner wall 61a. At this position, the rotating member 20 and the support edge 62 clamp the filter in between them, thus securing the filter in place to the filter support frame 60. Further, the first surface 21a of the rotating member is configured to transition into the corner edge surface 21c at an offset with respect to a plane that is perpendicular to the first surface 21a of the rotating member 20 and which plane coincides with the rotational axis A. This offset provides a functionality of a self-locking functionality, such that the filter lock 1 remains locked even when the filter experiences flexing due to drafts. Only by rotating the rotating member 20 from the secured position may the filter be dislocated from the filter support frame.

The filter lock, and its respective components, may be manufactured in, for instance plastic, or a metal. The filter lock may also be manufactured in other suitable materials for withstanding stresses potentially occurring in the present application of the described invention.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A filter lock (1) for securing a filter (50) to a filter support frame (60), the filter lock comprising
a supporting member (10), and
a rotating member (20) rotatably arranged to the supporting member (10) about a rotational axis (A), the rotating member (20) comprising a first rim surface (21a) and a second rim surface (21b),
wherein the filter lock (1) is configured to be arranged to a filter support frame (60) supporting a filter (50) such that the rotating member (20) is rotatable between a secured position, at which position the first rim surface (21a) of the rotating member is, when in use, facing the filter (50) such that said filter is secured to the filter support frame, and a fully open position, at which position the second rim surface (21 b) of the rotating member is, when in use, facing the filter (50).

2. Filter lock according to claim 1, wherein the supporting member (10) comprises an abutting surface (10c) connecting a top surface (10a) and a bottom surface (10b) of the supporting member, wherein the filter lock (1) is configured to be arranged to the filter support frame (60) supporting the filter (50) such that the abutting surface (10c) abuts the filter support frame (60), and the bottom surface (10b) faces the filter (50).

3. Filter lock according to claim 1 or 2, wherein the supporting member (10) comprises a protruding element (12a) configured to engage with an inner frame edge (63a) of the filter support frame (60).

4. Filter lock according to claim 3, wherein the protruding element (12a) protrudes from a top surface (10a) of the supporting member (10).

5. Filter lock according to any preceding claims, wherein the first rim surface (22a) of the rotating member (20) is substantially planar.

6. Filter lock according to claim 5, wherein the second rim surface (21b) of the rotating member (20) is substantially planar, and is arranged substantially perpendicular relative to the first rim surface (21a).

7. Filter lock according to any of the preceding claims, wherein a corner (21c) connecting the first rim surface (21a) and the second rim surface (21b) is curved.

8. Filter lock according to any of the preceding claims, wherein a corner (21c) connects the first rim surface (21a) and the second rim surface (21b), and the first rim surface (21a) transitions into the corner (21c) at an offset with respect to a plane that is perpendicular to the first rim surface (21a) of the rotating member (20) and which plane coincides with the rotational axis (A).

9. Filter lock according to claim 8, wherein a distance between the first rim surface (21a) and the rotational axis (A) is larger than a distance between the second rim surface (21b) and said plane.

10. Filter lock according to any preceding claims, wherein the filter lock (1) is configured to be arranged at an inner corner of a filter holding frame (60), and the supporting member of the filter lock comprises a first protruding element (12a) and a second protruding element (12b), each protruding element extending in directions substantially perpendicular to each other, wherein the protruding elements are configured to engage with second inner frame edges (63a, 63b) arranged on respective sides (61a, 61b) of said corner.

11. Filter lock according to claim 9, wherein the supporting member (10) comprises a first abutting surface (10c) and a second abutting surface (10d), said abutting surfaces being substantially planar and arranged mutually perpendicular to one another, said abutting surfaces configured to abut respective sides (61a, 61b) of said corner.

12. Filter lock according to any preceding claims, wherein the rotating member (20) comprises a gripping portion (26).

13. Use of a filter lock according to any preceding claims to secure a filter (50) to a filter support frame (60).

14. A filter system for filtering a fluid containing impurities, the filter system comprising: a filter support frame (60) comprising a support edge (62) and an inner frame edge (63); a filter (50) configured to be arranged in said filter support frame in abutment with the support edge (62), and a filter lock (1) according to any preceding claims configured to be arranged in-between said inner frame edge (63) and the filter (50) to secure the filter to the filter support frame (60) by rotating the rotating member (20) into a secured position.
